# EUROPEAN PATENT SPECIFICATION

(11) **EP 2 888 096 B1**
(45) Date of publication and mention of the grant of the patent: **27.12.2017**
(21) Application number: 13762203.1
(22) Date of filing: 08.08.2013
(51) Int. Cl.: B29C 70/38, B29C 35/08, B29C 65/38, B32B 37/06

(54) **Method and apparatus for manufacturing composite articles**
Verfahren und Vorrichtung zur Herstellung von Verbundartikeln
Méthode and appareil pour la fabrication d'objets composites

(30) Priority: 22.08.2012 GB 201214917
(43) Date of publication of application: 01.07.2015
(73) Proprietor: The University of Bristol, Clifton Bristol BS8 1TH (GB)
(72) Inventor: WILLIAMS, David, Bath Avon BA1 6JS (GB); RICCI, Renato, Bristol Somerset BS16 2LP (GB); STONEMAN, Alex, Bristol Somerset BS7 0BW (GB); GROVES, David, Portishead Somerset BS20 7FG (GB); DRANE, Andrew, Bristol Somerset BS5 8DD (GB)
(74) Representative: EIP
(86) International application number: PCT/GB2013/052126
(87) International publication number: WO 2014/029969

(56) References cited:
- EP-A1- 1 574 845
- WO-A1-2009/103981
- US-A1- 2006 048 881
- US-A1- 2012 138 223

## Description

### Field of the Invention

The present invention relates generally to the manufacture of composite articles from layers of composite material and, in particular, although not exclusively, to the heating of composite materials during the manufacture of composite articles.

### Background of the Invention

Composite materials for use in the manufacture of composite articles typically consist of reinforcement fibres, such as carbon fibres or glass fibres, held together by a 'matrix' material such as epoxy resin. Such composite materials are typically initially formed as relatively thin, flexible and mouldable layers. Before the matrix resin in the layers has been cured (hardened) to produce final articles the layers are often referred to as "prepreg". Composite articles, formed from layers (or plies) of prepreg, typically require a heat source during manufacture, to increase the tack (stickiness) of the layers as they are brought together. The heat source typically needs to apply energy quickly, consistently and controllably, in order to facilitate efficient manufacture. When the layers of prepreg have been brought together in the form of an article, they are typically subjected to high temperatures and pressures in order to 'cure' the composite material - that is, to form the chemical bonds that make the final article characteristically strong and stiff.

It is known that composite articles can be manufactured by a manual process of laying down layers of prepreg and by Automated Fibre Placement (AFP) processes, for example, where robotic arms are controlled to build up layers by applying ribbons of composite material, known as tows, either initially onto a mould (or 'tool') or to layers of prepreg that have previously been laid onto a mould. In a typical AFP process, the tows are laid down and then compressed onto the previous layer(s) by using a roller, which is carried by a head at the end of the robotic arm. Embodiments of the present invention are applicable to both manual and AFP processes of all kinds.

From US7731816, for example, it is known for an AFP system to employ an infra-red (IR) heater as a heat source. In addition to being able to control the heat emitted by the IR heater by varying the input current, US7731816 proposes employing a supplemental heated gas arrangement to help heat a tool, or tows that have previously been laid on the tool, to mitigate "intensity spikes" from the IR heater, which could otherwise heat the tool or tow above a burn point of the composite material that is being deployed. In addition, US7731816 proposes a supplemental cooling mechanism, which can be controlled to expel clean, dry air (or other gases such as Nitrogen) - at or below ambient temperature - onto the tool, or onto previously laid tows, to remove heat more quickly therefrom during manufacture, to increase controllability and, again, to avoid heating near to or above the burn point.

US 2006/048881 A1 relates to the accurate aiming or direction of pulsed laser light at precisely controlled areas on the resin veil, to tack together layers of fibre tape, such as carbon-fibre tape. The resin veil is selectively heated in discrete areas by pulsed radiant energy from one or more lasers.

WO 2009/103981 A1 relates to a bonding apparatus wherein a thermoplastic first material and a second material are bonded by a heater heating a bonding surface of the first material, to melt said surface, and moving means to move the two materials together in a bonded condition.

### Summary of the Invention

According to a first aspect, the present invention provides a method according to claim 1 of manufacturing a composite article from a composite material comprising increasing the surface tack of a contact surface by exposing the contact surface, which comes into contact with another surface during said manufacturing, to radiation pulses emitted by a pulsed radiation source.

Depending on context, manufacturing can mean either producing a new composite article or repairing an existing composite article that has, for example, been damaged.

According to a second aspect, the present invention provides an apparatus according to claim 12 for manufacturing a composite article from a composite material, the apparatus comprising a pulsed radiation source and a controller for controlling the operation of the pulsed radiation source to expose a contact surface, which comes into contact with another surface during said manufacturing, to radiation pulses emitted by the pulsed radiation source, wherein the radiation pulses emitted by the pulsed radiation source are configured to increase the surface tack of the contact surface.

### Brief Description of the Drawings

Various features and advantages of the invention will become apparent from the following description of embodiments of the invention, given by way of example only, which is made with reference to the accompanying drawings, of which:
Figure 1 is a temperature against time graph illustrating how the surface temperature of a composite material varies when exposed to a pulse of electromagnetic radiation;
Figure 2 is a temperature against time graph illustrating how the surface temperature of a composite material varies when exposed to a sequence of pulses of electromagnetic radiation;
Figures 3a and 3b are schematic diagrams of alternative heads of the kind employed on AFP systems according to embodiments of the present invention;
Figure 4 is a schematic diagram of an alternative system in which layers of previously laid composite material move below an array of pulsed radiation sources according to embodiments of the present invention
Figures 5a and 5b are schematic diagrams that illustrate two kinds of shaped reflector that can be employed to focus radiation pulses, which are emitted by respective pulsed radiation sources, onto respective targets;
Figures 5c and 5d are schematic diagrams that illustrate two kinds of shaped reflector that can be employed to focus radiation pulses, which are emitted by respective pulsed radiation sources, onto respective targets via radiation filters;
Figure 6 is a schematic diagram of a circuit for controlling an AFP system according to embodiments of the present invention.

### Detailed Description of the Invention

Various embodiments of the present invention will now be described in more detail with reference to the accompanying drawings. It will be appreciated that the invention is not limited in its application to the details of method and the arrangement of components as set forth in the following description or illustrated in the drawings. It will be apparent to a person skilled in the art that additional embodiments of the present invention not detailed in the description are possible and will fall within the scope of the present claims. Accordingly, the following description should not be interpreted as limiting in any way, and the scope of protection is defined solely by the claims appended hereto.

In general terms, embodiments of the present invention employ an alternative heating arrangement, which can be used in all kinds of manual or AFP manufacturing processes, for heating in a controllable manner a "contact surface" of at least one of: a mould or a tool onto which a layer or tow of prepreg is to be laid; a layer or tow of prepreg that is about to be laid, for example, onto a mould or tool; a previously laid layer or tow of prepreg before further layers or tows are laid thereon; or a composite article or part that is being repaired. It will be appreciated that the heating of a contact surface, for example to increase tack, typically results in a heating of the bulk material below the contact surface. The degree and depth of heating of the bulk material depends on various factors such as, for example, the intensity and wavelength(s) of the radiation to which the contact surface is exposed and the heating characteristics (e.g. conductivity) of the material being heated. The contact surface is referred to herein as a contact surface since, once heated, it comes into contact with another surface.

The heating system according to embodiments of the present invention employs as the heat source a pulsed electromagnetic radiation source (or simply a 'pulsed radiation source'). As will be described, the embodiments of the present invention employ, as the pulsed radiation source, a Xenon flashlamp of generally known kind, which can emit a relatively broadband radiation spectrum including one or more of IR, visible light and ultra-violet (UV) radiation components.

As used herein, a flashlamp is a type of electric arc lamp designed to provide short pulses (or flashes) of high energy, incoherent radiation with a relatively wide spectral content. Flashlamps have been used in photographic applications, as well as in a number of scientific, industrial and medical applications. The use of a pulsed radiation system, rather than a continuous heating system, opens up a number of new options for controlling heating temperature, as will be described herein.

Known flashlamps typically comprise a length of glass tubing forming a closed bulb with electrodes at either end. The bulb is filled with a gas that, when 'triggered', ionizes and conducts a high voltage pulse between the electrodes to produce the radiation (typically including visible light). Noble gases, such as Argon, Xenon and Krypton, can be used, and give different respective output spectra suitable for different applications. It is known to tune the output spectrum of a flashlamp by selecting different combinations of gas, gas pressure, voltage and current density among other things. Other gases including but not limited to Nitrogen, Neon or Helium may also be used. The glass making up the outer casing of a bulb is often fused quartz and can be doped with materials (such as cerium) in order to suppress or filter out unwanted parts of the spectrum. As used herein, for convenience, the term 'flashlamp' typically encompasses at least the bulb and the associated triggering circuitry.

For the heating of contact surfaces herein, the process may be optimised by adjusting one or more of a number of system parameters, including but not limited to: the number of pulses, pulse width (or flash duration), pulse intensity and pulse frequency. As will be described, shaped or 3D reflectors can also be employed to focus and control the direction of emitted radiation. Appropriate 3D reflectors may comprise flat, singly curved or doubly curved surfaces.

Testing has shown that a Xenon flashlamp is capable of heating contact surfaces, for example of composite material samples, very quickly, consistently and controllably, typically exceeding the performance of other heat sources, such as known IR heat sources. Moreover, after a pulse, gasses cool relatively quickly - that is, they retain less residual heat than filament-based heaters (after 'switch-off') - which means flashlamps afford far greater control over heating and cooling speed during operation, compared with filament-based heaters, and may obviate entirely supplemental heating and cooling sub-systems that are taught in the prior art. This greater heating and cooling control capability also supports increased manufacturing speeds, for example, whereby relative speeds between a heater and a contact surface being heated can be increased.

Testing has also shown that pulsed flashlamp heat sources have the capability to generate surface and bulk temperatures in composite materials that are suitable for use with both thermoplastic materials and thermoset materials; the former typically requiring higher temperatures for their manufacturing processes (up to 500°C or 600°C for curing) while the latter typically requiring lower temperatures (up to 250°C for curing) for their manufacturing processes. Moreover, pulsed heating sources find application in many other composite material processes, such as hot-forming, where a composite material is heated and then pressed between two faces of a die, and in the repair of composite articles, where a repair material is heated and introduced to an area of damage (which may also or instead be heated) to form a bond between adjacent parts (acting as a 'glue' or 'weld' on cooling). Embodiments of the invention encompass all such composite material manufacturing processes.

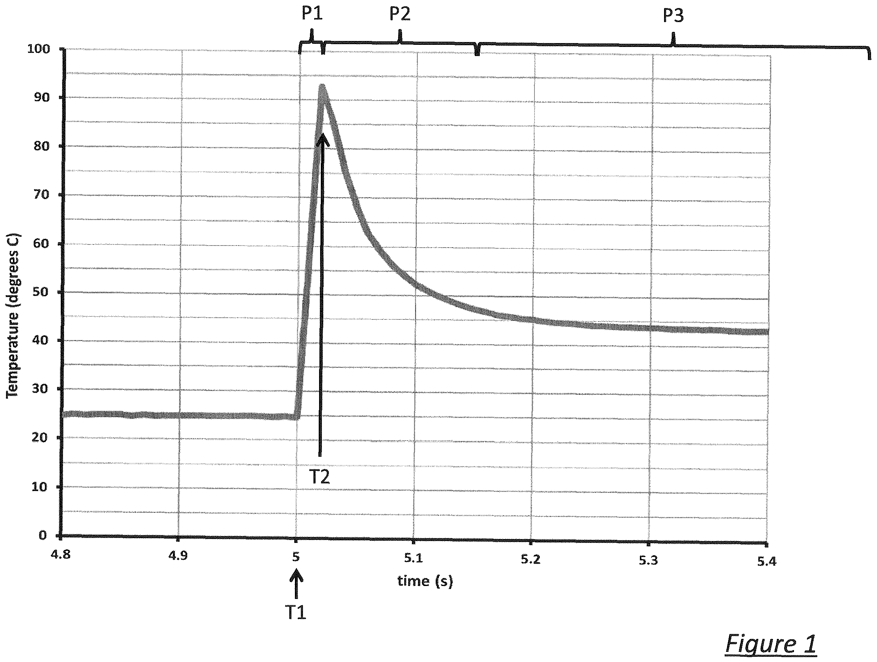

Figure 1 is a graph showing an illustrative composite material sample surface temperature verses time profile obtained from a single flash of a Xenon flashlamp onto the surface of a sample of composite prepreg material.

As illustrated in Figure 1, a single pulse (flash) at about time T1 causes a relatively fast heating of the surface of the composite material sample. Pulse duration can typically be controlled to be from a few milliseconds to tens of milliseconds, and the time of heating of the composite material generally coincides with the duration of the pulse, during a heating phase P1. After the pulse, from time T2, the surface of the composite material cools relatively quickly, although the temperature change is not as quick as in the heating phase. The cooling phase is shown to have a reasonably exponential heat decay profile, with a characteristic, initially rapid reduction in temperature, for example during a first part P2 of the cooling phase, followed by a relatively slower reduction in temperature, for example during the remaining part P3 of the cooling phase. Overall, the cooling phase (P2+P3) is relatively much longer than the heating phase PI, with the surface temperature not returning to the starting point for a significant period of time, perhaps, ranging from milliseconds to seconds. In respect of a composite material, and more generally in respect of any other contact surface that is being heated, a cooling profile has been shown, through testing, to depend on various factors such as the tooling (or other contact surface) material, the thickness of composite lay-up, the ambient temperature and any residual temperature left in the bulb (or other pulsed heating source).

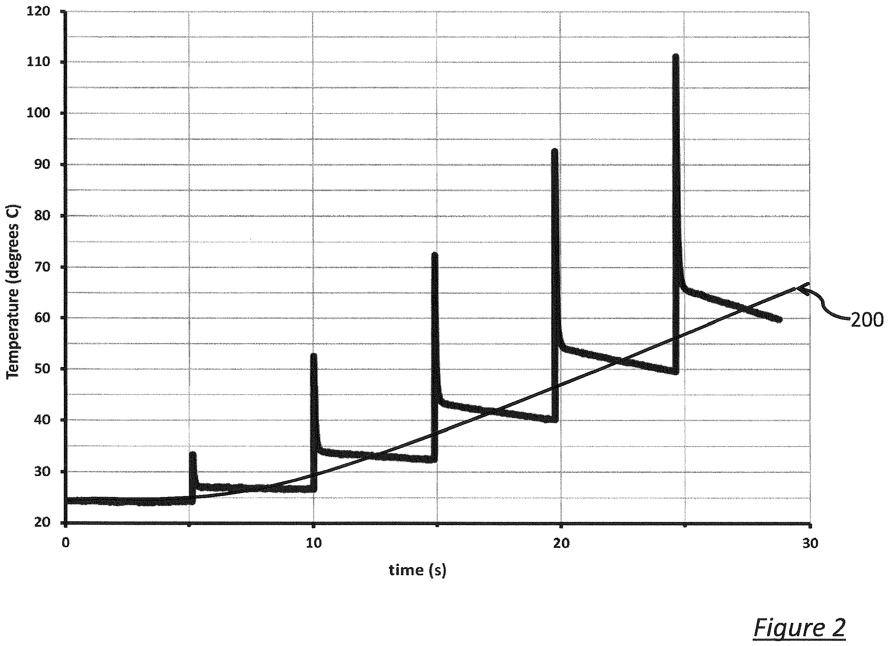

As illustrated by the graph in Figure 2, a sequence of pulses (flashes) in quick succession can be employed to raise the surface temperature of a layer of prepreg (or any other contact surface, such as a tool) in an extremely controlled manner. The temperature can be controlled, for example, according to the number of pulses and the time between pulses, which, in the illustrative example shown, is one pulse approximately every five seconds. Higher and lower pulse frequencies can of course be employed depending on the heating profile required. Once the surface has reached a target temperature, the time between pulses can be increased to maintain the desired temperature. Of course, other pulse parameters, such as pulse intensity, may be modified instead of or in addition to pulse frequency in order to control and maintain target temperatures. It will be appreciated that a time-varying average temperature 200 on the surface, due to the relatively short heating PI, and relatively longer cooling P2+P3 phases, is closer to the temperature during the slower part P3 of the cooling phase than the temperature during the initial part P2 of the cooling phase (as illustrated in Figure 1). This illustrates the potential to employ multiple pulses to achieve and then maintain a target temperature. The combination of fast heating (during the pulses) and relatively slow cooling (between the pulses) provides a novel method of temperature control during the manufacture or repair of composite articles. For example, according to embodiments of the present invention, as the surface temperature varies between the higher peaks and the lower cooling areas, the time delay between heating the surfaces and bringing the surfaces together may be varied to target the optimal temperature for the process. Consequently, advantage can be taken of the surface temperature peaks, without having to heat the bulk of a material to that high temperature.

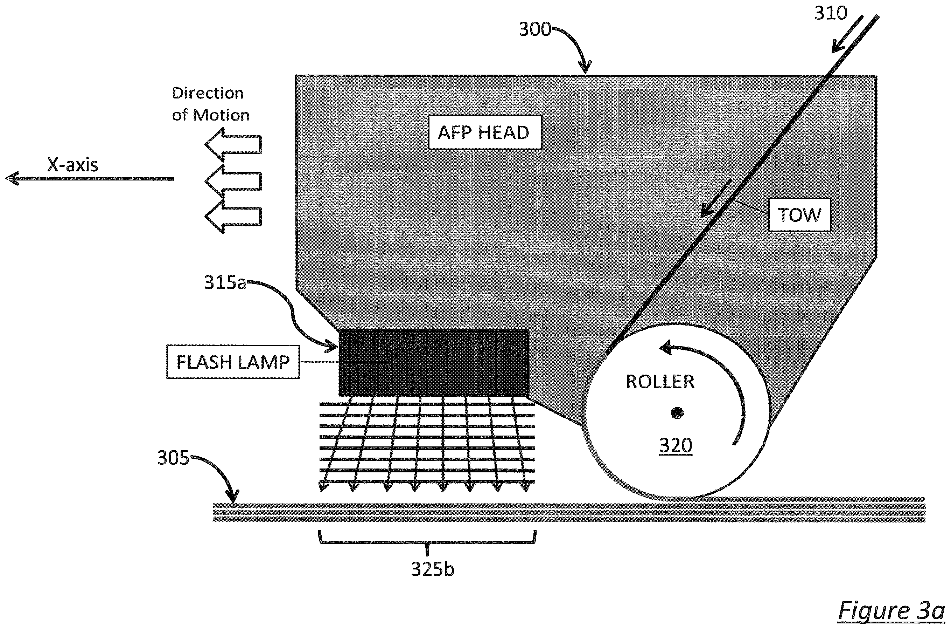

Part of an exemplary AFP system according to an embodiment of the present invention is illustrated in Figure 3a. The parts of the system that are not illustrated are generally known from the prior art.

As shown, an AFP head 300, which is typically mounted on the end of a computer controlled robotic arm (not shown) in a known way, is used to build up layers 305 of composite material by applying composite material tows 310 to the previously laid layers 305 of composite material. As illustrated, the AFP head 300 carries a flashlamp 315a ahead (in a direction of travel of the head 300, the x-axis) of a roller 320, which acts to lay down and apply pressure to a most recent tow 310. As shown, the flashlamp 315a acts to heat a region 325a - a "heating region" of the contact surface - of the previously laid tows 305, in advance of laying down the fresh tow 310, in order to increase the surface tack of the previously-laid tows. The increased tack improves adhesion between the previously laid tows 305 and the fresh tow 310.

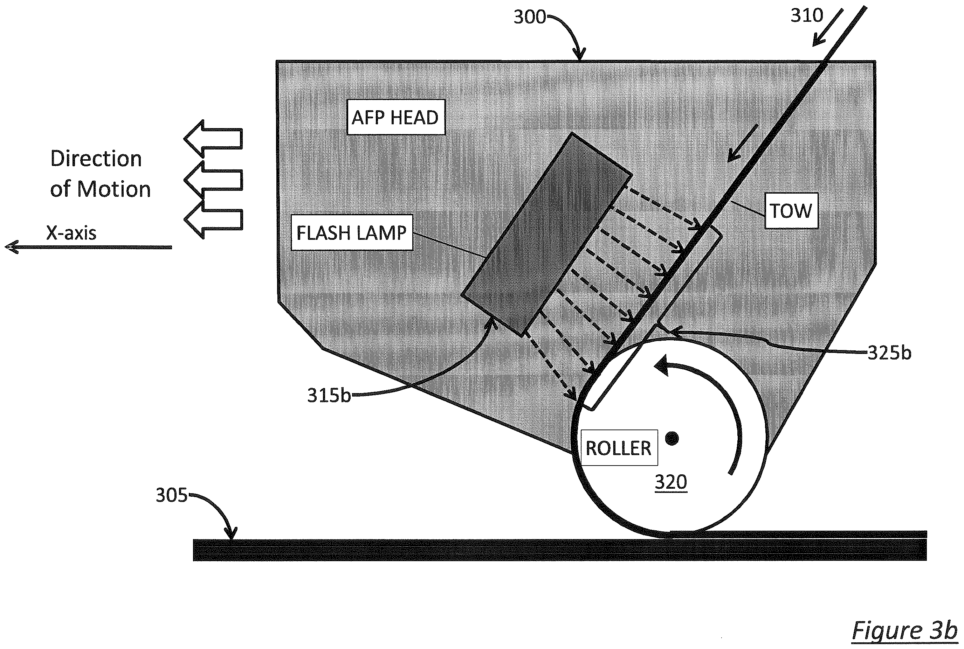

Part of an alternative exemplary AFP system according to an embodiment of the present invention is illustrated in Figure 3b. Elements of Figure 3b which are the same in Figure 3a are denoted by the same reference numerals and will not be described again. In contrast to Figure 3a, a flashlamp 315b in Figure 3b is mounted on a head 300 and oriented so that the emitted pulses of radiation are directed at a heating region 325b of a tow 310 that is moving through the head 300 and being laid. As in Figure 3b, the heating operation is intended to increase tack and improve adhesion between the previously laid tows 305 and the fresh tow 310.

In further alternative embodiments of the invention, plural flashlamps (or other pulsed radiation sources) may be mounted and arranged to heat substantially simultaneously both fresh tows and previously laid layers of composite material. Of course, one or more flashlamps (or other pulsed radiation sources) may instead or in addition be mounted and arranged to heat any other element or surface of the system, as the need dictates.

In practice, flashlamp parameters such as pulse frequency can be controlled according to a required head speed - that is, the speed the head moves across the tool or previously laid tows - to reach and maintain a target temperature. In particular, as head speed is increased, the frequency of the flashes is increased as well (or vice versa). The degree of heating may in addition, or alternatively, be controlled by varying at least one of the distance of the flashlamp from the contact surface and the angle of the flashlamp in relation to the contact surface. In addition (or alternatively) a radiation filter may be placed between the flashlamp and contact surface. Such a filter may be formed as part of the flashlight bulb or as an intermediate structure between the bulb and the contact surface being heated.

In other embodiments, the flashlamp may not be carried by a head that lays tows. For example, the flashlamp may without limitation be carried by a different robotic arm or other arrangement, which ensures that appropriate heating of the heating region is achieved. In addition, or alternatively, a system may have a bed on which a tool or previously laid layers of composite material rest, and the bed may be arranged to move relative to a static head, or each of the head and bed may be arranged to move relative to one another, for example, along the same axis (e.g. the x-axis) of movement. In other words, embodiments of the present invention accommodate, in general terms and without limitation, a head (or other arrangement that carries the pulsed radiation source) and tool or previously-laid layers of composite material (or layers about to be laid onto a tool or previously-laid layers) being arranged to move relative to one another by any suitable means.

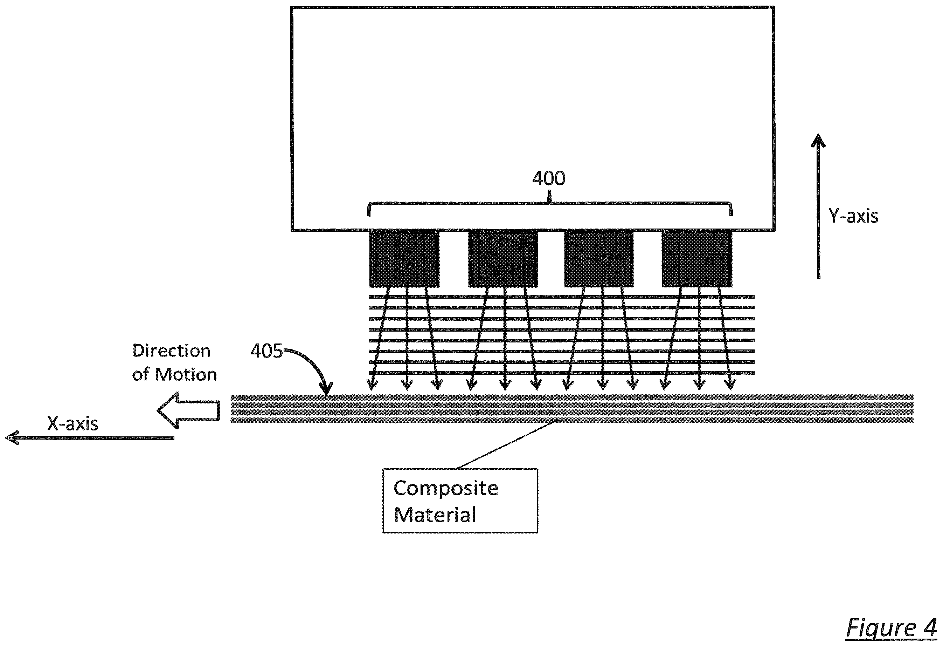

Figure 4 illustrates an embodiment of the present invention in which a flashlamp array 400 is arranged to heat a contact surface comprising layers 405 of composite material, which rest on a bed (not shown) that moves beneath the array 400 along an axis of movement (x-axis). The flashlamp array 400 may comprise a single flashlamp or plural flashlamps, for example, arranged in a two or three-dimensional arrangement. The array may be mounted on a gantry (not shown) above the bed. Where there are plural flashlamps, they may be controlled to flash substantially simultaneously (that is, at or near enough at the same time as each other in the context of the manufacturing speeds being employed and the heating and cooling profiles that are desired) or in a time-delayed (e.g. staggered) manner. Alternatively, each of the plural flashlamps may have an independent control system and be arranged to flash when required to attain a pre-determined heating profile on the contact surface of previously laid layers or a mould. Such an arrangement may be employed, for example, in a process in which layers of composite material are manually laid or as part of an AFP system. In this (and in all other embodiments), a distance between the flashlamp array and the contact surface to be heated may be controlled along a second axis (y-axis), thereby to increase control over heating.

In alternative embodiments (not illustrated herein), a flashlamp array could be mounted below in addition to or instead of above a contact surface to be heated. For example, by arranging a flashlamp array above and below (or, more generally, on either side) of one or more layers of composite material forming a composite structure, it would be possible to heat both respective contact surfaces substantially simultaneously, for example, to increase tack on both sides. This arrangement could, for example, find beneficial application in systems in which fresh layers or tows are laid substantially simultaneously onto both sides of an existing composite structure. Further, using flashlamp arrays to heat both sides of an existing composite structure could be employed to heat through the bulk material more quickly and evenly. This, for example, may be desirable in hot-forming applications.

There are a number of ways in which a degree of heating of a composite material by a flashlamp can be pre-characterised according to embodiments of the present invention. For example, the degree of heating by a given flashlamp of the contact surface of a given sample of composite material may be characterised empirically by measuring the surface temperature of the sample while varying one of the parameters mentioned above, including but not limited to: the distance of the flashlamp from the sample, the pulse frequency of the flashlamp, and the pulse intensity (power) and the pulse duration. The results of the characterisation may then be applied to a commercial AFP system, which employs a similar kind of flashlamp to heat a similar kind of composite material, for example, to specify the flashlamp parameters and speed of motion of a head. In alternative embodiments of the present invention, a closed loop control system may be employed in which one or more temperature sensors detect the surface temperature of previously laid layers of composite material. Signals from the temperature sensor(s) are fed into head and/or flashlamp control circuits, in order to vary one or more parameters of the flashlamp(s) and/or head, to ensure that the temperature of the surface of the composite material remains close to a target temperature and does not approach a burn temperature of the material.

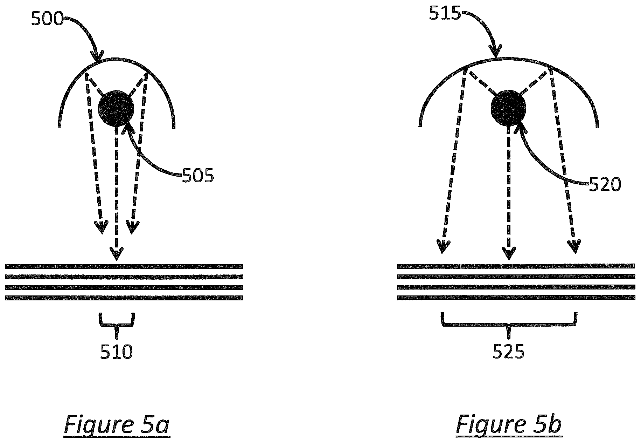

As has already been described, there are many flashlamp parameters that can be varied to influence the heating effect of any given flashlamp. In addition, the heating effect of a flashlamp may be significantly influenced by a reflector, for example, which directs flashlamp radiation towards the heating region of a mould or previously laid layer of composite material. As illustrated in Figure 5a, a reflector 500 may be designed in a known way to reflect radiation emitted from a flashlamp 505 into a relatively narrow heating region 510 on a contact surface or, as illustrated in Figure 5b, a reflector 515 may be designed to reflect radiation emitted from a flashlamp 520 into a relatively wide heating region 525 on a contact surface. The size of the region may in general terms be determined by the shape of the reflector, but can also be varied in operation by controlling the spacing between the flashlamp and the reflector. The intensity of the reflected radiation will typically also be significantly influenced by the surface finish and material of the reflector. Reflectors can also be wavelength-selective, for example, comprising a material that is more reflective to certain wavelengths of radiation (for example, IR wavelength components that beneficially act to heat the composite material), and less reflective to other wavelength components (for example, UV components that may act less to heat the composite material). Appropriate reflectors may be formed integrally on an interior or exterior surface of a flashlamp bulb or may be manufactured separately and then appropriately-positioned in the vicinity of the flashlamp bulb. Incident radiation that is not reflected by the reflectors in the examples in Figures 5a and 5b has not been illustrated or considered herein for simplicity of illustration only, and it will be immediately apparent to the skilled person that a significant portion of the radiation reaching the contact surface will be directly from the flashlamp; unless it is specifically filtered or blocked by an intervening filter arrangement.

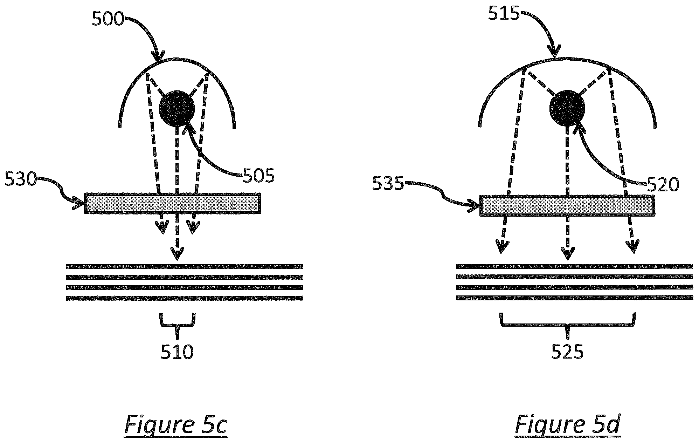

In alternative embodiments to those illustrated in Figures 5a and 5b, as shown in Figures 5c and 5d, reflector arrangements 500, 515 may be accompanied by respective radiation filters 530, 535. The filters 530, 535 can be arranged to attenuate certain wavelengths of radiation and/or pass certain wavelength bands of radiation in a known manner. Different combinations of reflector and filter can be employed to many different requirements. Of course, filters may instead be employed without employing reflectors.

In addition to their controllability, flashlamps can have a relatively broadband radiation output. For example, as indicated above, a Xenon flashlamp can be arranged to emit a relatively broadband radiation spectrum including visible light, and IR and UV radiation components. It is known that the spectral output of a flashlamp can be determined by the kind of gas used, the gas pressure in the bulb and the design of bulb itself. For any given design of flashlamp, the output spectrum may also be influenced by the voltage and current density applied across the gas. For example, higher current densities tend to deliver a flatter continuum spectrum whereas lower current densities can deliver more pronounced peaks at different wavelengths. Unwanted spectral bands may be removed by using filters. Consequently, for any given spectral output that is required for a particular composite material system, an appropriate flashlamp and filter system can be selected (or designed) and deployed.

The ability to select and control flashlamps in this way provides opportunities to optimise the output radiation profile of a flashlamp. For example, prepreg comprises both fibre and matrix component materials. Each of these component materials may absorb and heat differently for a given wavelength range. Such disparate and uneven heating characteristics may not be desirable in some scenarios. According to some embodiments of the present invention, a flashlamp source is selected that has plural output radiation peaks, which substantially correspond to radiation absorption peaks of each of the component materials. In this way, each of the component materials can be heated according to a similar heating profile (that is, temperature increase against time). This may achieve a more consistent and efficient heating profile for the composite material as a whole. In other embodiments, a flashlamp is selected to have a relatively flat, (e.g. substantially continuum) radiation spectrum which encompasses radiation absorption peaks of each of the component materials, thereby having a similarly efficient heating profile for each component material.

The relatively broadband radiation output capability of flashlamps provides additional opportunities during composite material manufacture. According to embodiments of the present invention, a flashlamp is selected that produces both IR and UV radiation components. While the IR components are selected to cause a required heating effect of a contact surface, for example, of a mould, previously laid composite material layers or layers about to be laid, the UV components are selected to at least partially cure (or initiate curing of) previously laid layers of composite material. Moreover, the matrix material of the composite may be preferentially designed to absorb the UV radiation to enhance curing. This, for example, provides an opportunity to speed up the manufacturing process by reducing, or removing entirely, the time needed, after all layers have been added, for heating and curing of the final composite article. More generally, for example, the composite material may be preferentially designed, including by doping with compounds or elements that have increased absorption or reaction characteristics in response to particular radiation wavelengths or wavelength bands that are emitted by pulsed radiation sources. As a further example, the composite material may be coated with a surface layer of an alternative material that preferentially absorbs or reflects particular wavelengths or wavelength bands that are emitted by pulsed radiation sources.

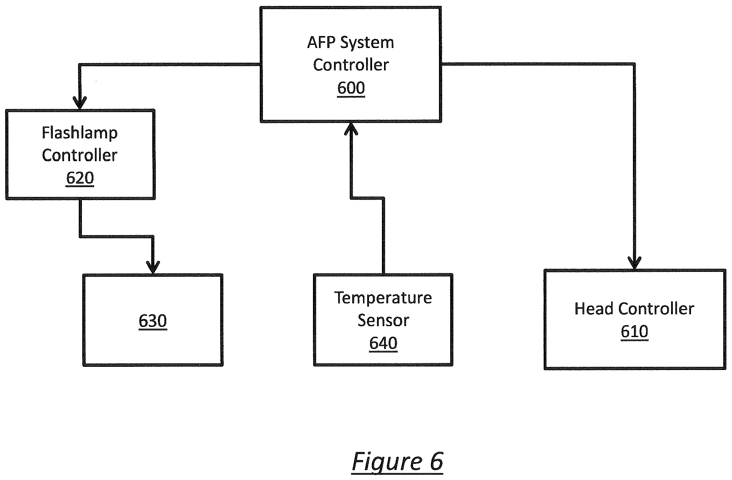

Figure 6 illustrates an exemplary AFP control system according to embodiments of the present invention. The control system comprises an AFP system controller 600, which controls the overall operation of the system, for example, according to an embedded control program. The control program can typically be modified by uploading revised code, from a user terminal (not shown) in a known way, and includes a target temperature and possibly a target temperature profile (which, for example, specifies speed of heating and cooling against time). The AFP system controller 600 in turn controls, via appropriate signalling and signalling lines, a head controller 610 and a flashlamp controller 620. The head controller 610 controls the speed and direction of motion of a head, which in turn carries a flashlamp and a roller, for example, as generally described in relation to Figures 3a or 3b. The flashlamp controller 610 controls at least the pulse intensity and pulse timing of the flashlamp. The AFP system controller 600 receives temperature signals from a temperature sensor 640. The temperature sensor 640 detects the temperature of at least a contact surface, for example, of a tool, layers of previously laid composite material or layers about to be laid. Based on the temperature signals from the temperature sensor 640, and according to its control program, the AFP system controller 600 controls the head controller 610 to change the speed of the head and/or the flashlamp controller 620 to change the flash intensity and/or frequency as required to meet the target temperature and, if present, the target temperature profile. The various controllers in Figure 6 are typically programmable controllers of known kind, for example, which contain appropriate control circuitry and memories holding appropriate control instructions. The controllers communicate via known electrical, optical or wireless interfaces.

The above embodiments are to be understood as illustrative examples of the invention. Further embodiments of the invention are envisaged. For example, systems according to embodiments of the present invention may employ plural different kinds of flashlamp, each having a different output spectrum (or other different parameters). For example, one kind of flashlamp may output significant IR radiation components and another kind of flashlamp may output significant UV components. Moreover, different kinds of flashlamps may be mounted at different locations: for example, IR flashlamps may be mounted in front of a roller on an AFP system to heat previously laid layers of composite material while UV flashlamps may be mounted behind the roller to cause at least a degree of curing before a next layer is added. Many other alternative arrangements are conceivable based on the descriptions herein. It is to be understood that any feature described in relation to any one embodiment may be used alone, or, if the context permits, in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method of manufacturing a composite article from a composite material comprising increasing the surface tack of a contact surface by exposing the contact surface, which comes into contact with another surface during said manufacture, to radiation pulses emitted by at least one pulsed radiation source comprising a flashlamp (315a), wherein exposing the contact surface to said pulses causes heating of the contact surface.

2. A method according to claim 1, wherein the contact surface is at least one of a layer of composite material being laid, one or more previously laid layers (305) of composite material, an article being repaired (or a composite material being used to effect the repair) or a shaped tool on which a layer of composite material is being laid.

3. A method according to any preceding claim, comprising laying a layer of composite material onto a shaped tool or onto previously laid layers of composite material.

4. A method according to claim 3, wherein the layer of composite material is laid progressively from a first region to a second region of the layers or shaped tool and the contact surface or contact surfaces in advance of where the layer comes into contact with the layers or shaped tool is or are exposed to said radiation pulses.

5. A method according to claim 4, wherein the layer of composite material is laid progressively using a head arrangement, carrying at least one flashlamp.

6. A method according to claim 5, wherein the head arrangement carries a roller, which applies pressure to the resulting structure.

7. A method according to any one of the preceding claims, including varying during said manufacture at least one parameter selected from: pulse repetition rate, pulse intensity, pulse duration, a distance of the pulsed radiation source from the contact surface and an angle of incidence of radiation emitted by the pulsed radiation source with respect to the contact surface.

8. A method according to claim 7, including setting a target temperature for the contact surface, monitoring the temperature of the contact surface during said manufacture and controlling at least one of said parameters to achieve and/or maintain the target temperature on the contact surface.

9. A method according to any one of the preceding claims, wherein the pulsed radiation source comprises a gas discharge tube; optionally, wherein the discharge tube contains a volume of noble gas; and further optionally, wherein the gas comprises Xenon.

10. A method according to any one of the preceding claims, wherein pulses emitted by the pulsed radiation source comprise a spectrum including a wavelength that acts to at least heat the contact surface; optionally, wherein the wavelength is in the visible, near-infra-red or infra-red region of the spectrum.

11. A method according to any one of the preceding claims, wherein pulses emitted by the pulsed radiation source are focused onto a heating region (325a) of the contact surface by a shaped or 3D reflector (500).

12. Apparatus for manufacturing a composite article from a composite material, the apparatus comprising; at least one pulsed radiation source comprising a flashlamp (315a), and a controller (610) for controlling the operation of the pulsed radiation source to expose a contact surface, which comes into contact with another surface during said manufacture, to radiation pulses emitted by the pulsed radiation source, wherein the radiation pulses emitted by the pulsed radiation source are configured to increase the surface tack of the contact surface, wherein exposing the contact surface to said pulses causes heating of the contact surface.

13. An apparatus according to claim 12 wherein the contact surface is at least one of a layer of composite material being laid, one or more previously laid layers (305) of composite material or a shaped tool on which a layer of composite material is being laid.

14. An apparatus according to claim 12 or claim 13, comprising a head arrangement for laying a layer of composite material onto a shaped tool or onto previously laid layers (305) of composite material.

15. An apparatus according to claim 14, wherein the head arrangement carries the at least one pulsed radiation source.

16. An apparatus according to claim 15, wherein the head arrangement carries a roller configured to apply pressure to the resulting structure.

17. An apparatus according to any one of claims 14 to 16, comprising a controller (620) for varying during said manufacture at least one parameter of the pulsed radiation source selected from: pulse repetition rate, pulse intensity, pulse duration, a distance of the pulsed radiation source from the contact surface and an angle of incidence of radiation emitted by the pulsed radiation source with respect to the contact surface.

18. An apparatus according to claim 17, comprising means for setting a target temperature for the contact surface, means for monitoring the temperature of the contact surface during said manufacturing and means for controlling at least one of said parameters to achieve and/or maintain the target temperature on the contact surface.

19. An apparatus according to any one of claims 12 to 18, wherein the pulsed radiation source comprises a gas discharge tube; optionally, wherein the discharge tube contains a volume of noble gas; and further optionally, wherein the gas comprises Xenon

20. An apparatus according to any one of claims 12 to 19, wherein the pulsed radiation source is arranged to emit a spectrum including a wavelength that acts to at least heat the contact surface; optionally, wherein the wavelength is in the visible, near-infra-red or infra-red region of the spectrum.

21. An apparatus according to any one of claims 12 to 20, comprising a shaped or 3D reflector (500) to focus pulses emitted by the pulsed radiation source onto a heating region (325a) of the contact surface.

## Patentansprüche

1. Verfahren zum Herstellen eines Verbundwerkstoffgegenstandes aus einem Verbundmaterial, umfassend das Erhöhen der Oberflächenhaftung einer Kontaktoberfläche, die während der Herstellung mit einer anderen Oberfläche in Kontakt kommt, durch Aussetzen der Kontaktoberfläche mit Strahlungsimpulsen, die von mindestens einer gepulsten Strahlungsquelle emittiert werden, die eine Blitzlampe (315a) aufweist, wobei das Aussetzen der Kontaktoberfläche mit den Pulsen eine Erwärmung der Kontaktoberfläche verursacht.

2. Verfahren nach Anspruch 1, wobei die Kontaktoberfläche mindestens eines ist von einer Schicht eines gelegten Verbundwerkstoffes, einer oder mehreren zuvor gelegten Schichten (305) eines Verbundwerkstoffes, einem Gegenstand, der repariert wurde (oder ein Verbundwerkstoff, der verwendet wurde, um die Reparatur durchzuführen), oder einem Formwerkzeug, auf dem eine Schicht eines Verbundwerkstoffs gelegt wurde.

3. Verfahren nach einem der vorhergehenden Ansprüche, umfassend das Legen einer Schicht eines Verbundwerkstoffs auf ein Formwerkzeug oder auf vorher gelegten Schichten eines Verbundwerkstoffs.

4. Verfahren nach Anspruch 3, wobei die Schicht des Verbundwerkstoffs von einem ersten Bereich zu einem zweiten Bereich der Schichten oder des Formwerkzeugs progressiv gelegt ist und die Kontaktoberfläche oder Kontaktoberflächen im Voraus den Strahlungsimpulsen ausgesetzt wird oder werden, wo die Schicht in Kontakt mit den Schichten oder dem Formwerkzeug kommt.

5. Verfahren nach Anspruch 4, wobei die Schicht des Verbundwerkstoffs progressiv unter Verwendung einer Kopfanordnung, die mindestens eine Blitzlampe trägt, gelegt ist.

6. Verfahren nach Anspruch 5, wobei die Kopfanordnung eine Walze trägt, die Druck auf die resultierende Struktur ausübt.

7. Verfahren nach einem der vorhergehenden Ansprüche, umfassend das Variieren mindestens eines Parameters ausgewählt von: Pulswiederholrate, Pulsintensität, Pulsdauer, Abstand zwischen der gepulsten Strahlungsquelle und der Kontaktoberfläche und Einfallswinkel der Strahlung, die durch die gepulste Strahlungsquelle emittiert wird, in Bezug auf die Kontaktoberfläche.

8. Verfahren nach Anspruch 7, umfassend das Einstellen einer Solltemperatur für die Kontaktoberfläche, Überwachen der Temperatur der Kontaktoberfläche während des Herstellungsprozesses und Steuern mindestens eines Parameters, um die Solltemperatur auf der Kontaktoberfläche zu erreichen und/oder aufrechtzuerhalten.

9. Verfahren nach einem der vorhergehenden Ansprüche, wobei die gepulste Strahlungsquelle eine Gasentladungsröhre umfasst; optional, wobei die Entladungsröhre ein Volumen an Edelgas enthält; und außerdem optional, wobei das Gas Xenon umfasst.

10. Verfahren nach einem der vorhergehenden Ansprüche, wobei die Pulse, die von der gepulsten Strahlungsquelle emittiert werden, ein Spektrum umfassen, das eine Wellenlänge einschließt, die zumindest zum Erwärmen der Kontaktoberfläche wirkt; optional, wobei die Wellenlänge im sichtbaren nah-infraroten oder infraroten Bereich des Spektrums liegt.

11. Verfahren nach einem der vorhergehenden Ansprüche, wobei die Impulse, die von der gepulsten Strahlenquelle emittiert werden, durch einen geformten oder 3D-Reflektor (500) auf einen Heizbereich (325a) der Kontaktoberfläche fokussiert werden.

12. Vorrichtung zum Herstellen eines Verbundwerkstoffgegenstandes aus einem Verbundwerkstoff, wobei die Vorrichtung umfasst;
mindestens eine gepulste Strahlungsquelle, die eine Blitzlampe (315a) umfasst, und
eine Steuerung (610) zum Steuern des Betriebs der gepulsten Strahlungsquelle, um eine Kontaktoberfläche, die in Kontakt mit einer anderen Oberfläche während der Herstellung kommt, den Strahlungsimpulsen auszusetzen, die von der gepulsten Strahlungsquelle emittiert werden,
wobei die Strahlungsimpulse, die durch die gepulste Strahlungsquelle emittiert werden, eingerichtet sind, die Oberflächenhaftung der Kontaktoberfläche zu erhöhen, wobei das Aussetzen der Kontaktoberfläche mit den Impulsen ein Erwärmen der Kontaktoberfläche bewirkt.

13. Vorrichtung nach Anspruch 12, wobei die Kontaktoberfläche mindestens eines ist von einer Schicht aus gelegtem Verbundwerkstoff, einer oder mehreren zuvor gelegten Schichten (305) eines Verbundwerkstoffs oder einem Formwerkzeug, auf das eine Schicht von Verbundwerkstoff gelegt ist.

14. Vorrichtung nach Anspruch 12 oder Anspruch 13, umfassend eine Kopfanordnung zum Legen einer Schicht des Verbundwerkstoffs auf ein Formwerkzeug oder auf eine zuvor verlegte Schicht (305) eines Verbundwerkstoffs.

15. Vorrichtung nach Anspruch 14, wobei die Kopfvorrichtung mindestens eine gepulste Strahlungsquelle trägt.

16. Vorrichtung nach Anspruch 15, wobei die Kopfvorrichtung eine Walze trägt, die eingerichtet ist, einen Druck auf die resultierende Struktur auszuüben.

17. Vorrichtung nach einem der vorhergehenden Ansprüche 14 bis 16, umfassend eine Steuerung (620) zum Variieren mindestens eines Parameters der gepulsten Strahlungsquelle während der Herstellung ausgewählt von: Pulswiederholrate, Pulsintensität, Pulsdauer, Abstand zwischen der gepulsten Strahlungsquelle und der Kontaktoberfläche und Einfallswinkel zwischen der Strahlung, die durch die gepulste Strahlungsquelle emittiert wird, in Bezug auf die Kontaktoberfläche.

18. Vorrichtung nach Anspruch 17, umfassend Mittel zum Einstellen einer Solltemperatur für die Kontaktoberfläche, Mittel zum Überwachen der Temperatur der Kontaktoberfläche während der Herstellung und Mittel zum Steuern mindestens eines Parameters, um die Solltemperatur auf der Kontaktoberfläche zu erreichen und/oder aufrechtzuerhalten.

19. Vorrichtung nach einem der Ansprüche 12 bis 18, wobei die gepulste Strahlungsquelle eine Gasentladungsröhre umfasst; optional, wobei die Entladungsröhre ein Volumen an Edelgas umfasst; und außerdem optional, wobei das Gas Xenon umfasst.

20. Vorrichtung nach einem der Ansprüche 12 bis 19, wobei die gepulste Strahlungsquelle eingerichtet ist, ein Spektrum zu emittieren, das eine Wellenlänge umfasst, die wirkt, um die Kontaktoberfläche zumindest zu erwärmen; optional, wobei die Wellenlänge im sichtbaren, im nah-infraroten oder infraroten Bereich des Spektrums liegt.

21. Vorrichtung nach einem der vorhergehenden Ansprüche 12 bis 20, umfassend einen geformten oder 3D-Reflektor (500), um die von der gepulsten Strahlungsquelle emittierten Pulse auf einen Heizbereich (325) der Kontaktoberfläche zu fokussieren.

## Revendications

1. Procédé de fabrication d'un article composite à partir d'un matériau composite comprenant l'augmentation de l'adhérence de surface d'une surface de contact par exposition de la surface de contact, qui entre en contact avec une autre surface pendant ladite fabrication, à des impulsions de rayonnement émises par au moins une source de rayonnement pulsé comprenant une lampe-éclair (315a), où l'exposition de la surface de contact auxdites impulsions provoque le chauffage de la surface de contact.

2. Procédé selon la revendication 1, dans lequel la surface de contact est au moins l'un d'une couche de matériau composite qui est déposée, d'une ou plusieurs couches préalablement déposées (305) de matériau composite, d'un article qui est réparé (ou un matériau composite qui est utilisé pour effectuer la réparation) et d'un outil conformé sur lequel une couche de matériau composite est déposée.

3. Procédé selon l'une des revendications précédentes, comprenant le dépôt d'une couche de matériau composite sur un outil conformé ou sur des couches préalablement déposées de matériau composite.

4. Procédé selon la revendication 3, dans lequel la couche de matériau composite est déposée progressivement d'une première région à une deuxième région des couches ou de l'outil conformé et la surface de contact ou les surfaces de contact avant l'endroit où la couche entre en contact avec les couches ou l'outil conformé est ou sont exposées auxdites impulsions de rayonnement.

5. Procédé selon la revendication 4, dans lequel la couche de matériau composite est déposée progressivement en utilisant un agencement de tête, portant au moins une lampe-éclair.

6. Procédé selon la revendication 5, dans lequel l'agencement de tête porte un rouleau, qui applique une pression à la structure résultante.

7. Procédé selon l'une quelconque des revendications précédentes, comportant la variation, pendant ladite fabrication, d'au moins un paramètre choisi entre : le taux de répétition d'impulsions, l'intensité d'impulsion, la durée d'impulsion, la distance de la source de rayonnement pulsé par rapport à la surface de contact, et un angle d'incidence du rayonnement émis par la source de rayonnement pulsé par rapport à la surface de contact.

8. Procédé selon la revendication 7, comportant le réglage d'une température cible pour la surface de contact, la surveillance de la température de la surface de contact pendant ladite fabrication et la commande d'au moins l'un desdits paramètres pour atteindre et/ou maintenir la température cible sur la surface de contact.

9. Procédé selon l'une quelconque des revendications précédentes, dans lequel la source de rayonnement pulsé comprend un tube à décharge gazeuse ; facultativement, dans lequel le tube à décharge contient un volume de gaz noble ; et en outre facultativement, dans lequel le gaz comprend du Xénon.

10. Procédé selon l'une quelconque des revendications précédentes, dans lequel les impulsions émises par la source de rayonnement pulsé comprennent un spectre comportant une longueur d'onde qui agit pour au moins chauffer la surface de contact ; facultativement, dans lequel la longueur d'onde est dans la région visible, du proche infrarouge ou de l'infrarouge du spectre.

11. Procédé selon l'une quelconque des revendications précédentes, dans lequel les impulsions émises par la source de rayonnement pulsé sont focalisées sur une région de chauffage (325a) de la surface de contact par un réflecteur (500) conformé ou 3D.

12. Appareil pour fabriquer un article composite à partir d'un matériau composite, l'appareil comprenant :
au moins une source de rayonnement pulsé comprenant une lampe-éclair (315a), et
une unité de commande (610) pour commander le fonctionnement de la source de rayonnement pulsé pour exposer une surface de contact, qui entre en contact avec une autre surface pendant ladite fabrication, à des impulsions de rayonnement émises par la source de rayonnement pulsé,
dans lequel les impulsions de rayonnement émises par la source de rayonnement pulsé sont configurées pour augmenter l'adhérence de surface de la surface de contact, où l'exposition de la surface de contact auxdites impulsions provoque le chauffage de la surface de contact.

13. Appareil selon la revendication 12, dans lequel la surface de contact est au moins l'un d'une couche de matériau composite qui est déposée, d'une ou plusieurs couches préalablement déposées (305) de matériau composite et d'un outil conformé sur lequel une couche de matériau composite est déposée.

14. Appareil selon la revendication 12 ou 13, comprenant un agencement de tête pour déposer une couche de matériau composite sur un outil conformé ou sur des couches préalablement déposées (305) de matériau composite.

15. Appareil selon la revendication 14, dans lequel l'agencement de tête porte l'au moins une source de rayonnement pulsé.

16. Appareil selon la revendication 15, dans lequel l'agencement de tête porte un rouleau configuré pour appliquer une pression à la structure résultante.

17. Appareil selon l'une quelconque des revendications 14 à 16, comprenant une unité de commande (620) pour faire varier, pendant ladite fabrication, au moins un paramètre de la source de rayonnement pulsé choisi entre : le taux de répétition d'impulsions, l'intensité d'impulsion, la durée d'impulsion, la distance de la source de rayonnement pulsé par rapport à la surface de contact, et un angle d'incidence du rayonnement émis par la source de rayonnement pulsé par rapport à la surface de contact.

18. Appareil selon la revendication 17, comprenant un moyen de réglage d'une température cible pour la surface de contact, un moyen de surveillance de la température de la surface de contact pendant ladite fabrication et un moyen de commande d'au moins l'un desdits paramètres pour atteindre et/ou maintenir la température cible sur la surface de contact.

19. Appareil selon l'une quelconque des revendications 12 à 18, dans lequel la source de rayonnement pulsé comprend un tube à décharge gazeuse ; facultativement, dans lequel le tube à décharge contient un volume de gaz noble ; et en outre facultativement, dans lequel le gaz comprend du Xénon.

20. Appareil selon l'une quelconque des revendications 12 à 19, dans lequel la source de rayonnement pulsé est agencée pour émettre un spectre comportant une longueur d'onde qui agit pour au moins chauffer la surface de contact ; facultativement, dans lequel la longueur d'onde est dans la région visible, du proche infrarouge ou de l'infrarouge du spectre.

21. Appareil selon l'une quelconque des revendications 12 à 20, comprenant un réflecteur (500) conformé ou 3D pour focaliser les impulsions émises par la source de rayonnement pulsé sur une région de chauffage (325a) de la surface de contact.
